# EUROPEAN PATENT APPLICATION

(11) **EP 3 632 265 A1**
(43) Date of publication of application: **08.04.2020**
(21) Application number: 19200853.0
(22) Date of filing: 01.10.2019
(51) Int. Cl.: A47B 95/00, F16B 12/20

(54) **DEVICE FOR ATTACHING A FURNITURE COMPONENT TO A WALL**

(30) Priority: 03.10.2018 IT 201800009125
(71) Applicant: O.M.M. Srl dell'Ing. Roberto Natale Mariani, 20832 Desio (MB) (IT)
(72) Inventor: MARIANI, Roberto Natale, 20832 Desio (MB) (IT); MARCHITTI, William Marco, 20832 Desio (MB) (IT)
(74) Representative: Colombo, Stefano Paolo

(57) **Abstract**

A side bracket support (1) for fastening a furniture unit to a wall (W), the furniture unit comprising an upright (V), the side bracket support (1) comprising: a wall plate (10) configured to be fixed to a wall (W), said plate (10) comprising a transverse slot (14) for a wall attachment member (D), the transverse slot (14) allowing variation of the relative position of said attachment member (D) and said wall plate (10) so as to provide a horizontal adjustment, a pin (30) projecting from said plate (10), the pin being configured in such a way that the relative position of said pin (30) and said wall plate (10) can be varied so as to provide a vertical adjustment (VV), and a bush (40), configured to engage with said pin (30) along a narrowed part (34) thereof with a smaller cross-section so as to provide a depthwise adjustment (PP).

## Description

### BACKGROUND OF THE INVENTION

The present invention relates to the furniture industry. In particular, it relates to a device for fastening a furniture component, for example a hanging unit, to a wall. Below the device will also be referred to by the expression "side bracket support".

### BACKGROUND ART

As is known, a furniture unit typically comprises two vertical panels (commonly called "uprights", "flanks" or "shoulders"), a horizontal bottom panel (commonly called "base") and a top panel which is also horizontal (commonly called "lid"). Furthermore, the furniture unit may comprise a number of intermediate horizontal panels, otherwise known as "shelves".

Some furniture units rest on the ground, while others are suspended, i.e. are fixed projecting from a vertical wall. For example, in a kitchen, furniture units are generally provided hung from a wall.

Different attachment systems for hanging a furniture unit on a wall are known.

For example, Italian patent No. 10215000030631 in the name of the same Applicant describes a device for attaching a furniture component to a vertical wall, comprising a device for recess-mounting in the furniture component and engaging means which can be fixed to the wall, said recess-mounting device comprising a box-shaped body which has, movably mounted inside it, an attachment arm provided with a distal end intended to engage with said engaging means, said attachment arm being mounted on a support arm whose position can be adjusted inside said box-shaped body, wherein said attachment arm is mounted pivoting between a backwardly inclined disengaged condition, where it projects from said box-shaped body, and a substantially erect locking condition. Moreover operating means are provided for controlling the rotation of said pivoting attachment arm.

### SUMMARY OF THE INVENTION

The device according to Italian patent 102015000030631 is very efficient and allows three adjustments, namely a vertical adjustment, a horizontal adjustment and a depthwise adjustment in order to compensate for any assembly imprecision or defects in the wall (and/or furniture unit).

The Applicant has, however, defined the object of improving the system described in the aforementioned Italian patent 102015000030631, reducing the number of components and the overall size of the device.

According to the present invention, a compact device comprising a wall bracket, configured to provide a horizontal adjustment, and a pin, configured to penetrate inside a panel of the furniture unit, is provided, the pin being displaceable with respect to the wall bracket so as to provide a vertical adjustment and having a narrowed portion configured to cooperate with a bush provided with a locking grub screw.

According to a first aspect, the present invention relates to a side bracket support for fastening a furniture unit to a wall, the furniture unit comprising an upright, the side bracket support comprising:
a wall plate configured to be fixed to a wall, said plate comprising a transverse slot for a wall attachment member, the transverse slot allowing variation of the relative position of the said attachment member and said wall plate so as to provide a horizontal adjustment,
a pin, projecting from said plate, the pin being configured in such a way that the relative position of said pin and said wall plate can be varied so as to provide a vertical adjustment, and
a bush, configured to engage with said pin along a narrowed part thereof with a smaller cross-section so as to provide a depthwise adjustment.

Preferably, the plate has two transverse slots for two respective wall attachment members.

According to embodiments, the plate further comprises a longitudinal slot and a screw having a head and a shank, the head of the screw being configured to engage inside the longitudinal slot and the shank of the screw being configured to engage inside a longitudinal hole of the pin.

According to embodiments, the longitudinal slot is flared and the head of the screw is shaped in a substantially complementary manner with respect to the flared form of the longitudinal slot.

According to embodiments, each of said transverse slots is flared.

According to embodiments, said pin comprises a base having a polygonal cross-section for screwing or unscrewing the pin with respect to the screw and, consequently, with respect to the plate.

According to embodiments, said pin comprises an enlarged anti-disengagement end for preventing - in the event of the grub screw of the bush coming loose - the pin from separating from the bush and the furniture unit from being no longer firmly fastened to the wall.

According to another aspect, the present invention relates to a furniture unit comprising a vertical panel and a horizontal panel and a side bracket support according to any one of the preceding claims, wherein the vertical panel comprises a first hole for the pin and a second hole for the bush, the second hole being substantially perpendicular to the first hole and wherein
the axis of said second hole is substantially perpendicular to the plane of said vertical panel so that locking of said bush with respect to the pin is carried out on one side of said vertical panel or
the axis of said second hole is substantially parallel to the plane of said vertical panel so that locking of said bush with respect to the pin is carried out at the top end of said vertical panel.

### BRIEF DESCRIPTON OF THE DRAWINGS

The present invention will become clearer from the following detailed description, provided by way of a non-limiting example, to be read with reference to the accompanying drawings, in which:
- Figures 1.1 and 1.2 are axonometric views of the device according to an embodiment of the present invention with the bush horizontal and vertical, respectively;
- Figure 2.1 is a front elevation view of the device according to Figure 1.1;
- Figure 2.2 is a view of the device along the line A-A of Figure 2.1;
- Figures 2.3 - 2.5 are other views (back, side and top plan views) of the device according to Figure 1.1;
- Figures 3.1 and 3.2 are views of the screw of the device;
- Figures 4.1 and 4.2 are views of the wall plate with slots;
- Figures 5.1 and 5.2 are views of the pin;
- Figures 6.1 and 6.2 are views of the bush;
- Figure 7 is a side view of the grub screw;
- Figures 8.1 and 8.2 show cross-sectional views of the device according to Fig. 1.1 fixed to the wall and recess-mounted inside an upright of a furniture unit;
- Figures 9.1 and 9.2 show cross-sectional views of the device according to Fig. 1.1 fixed to the wall and not recess-mounted inside an upright of a furniture unit;
- Figures 10.1 and 10.2 show cross-sectional views of the device according to Fig. 1.2 fixed to the wall and recess-mounted inside an upright of a furniture unit; and
- Figures 11.1 and 11.2 show cross-sectional views of the device according to Fig. 1.2 fixed to the wall and not recess-mounted inside an upright of a furniture unit.

### DETAILED DESCRIPTION

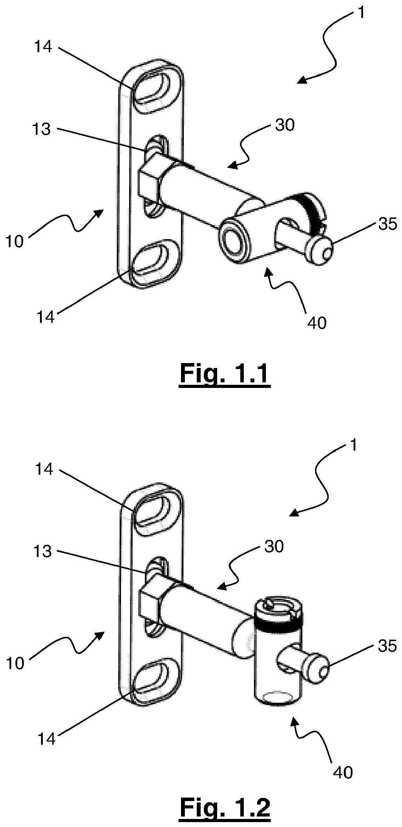

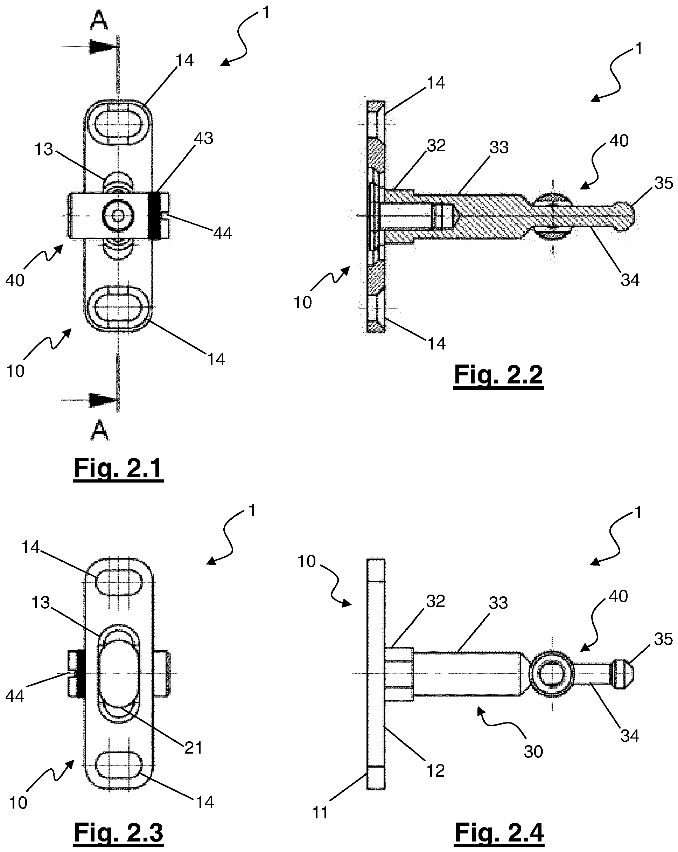

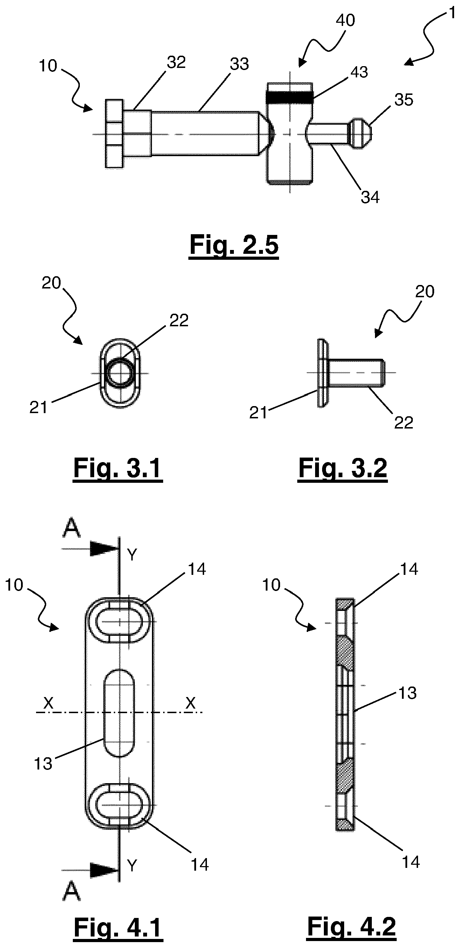

With reference initially to Figures 1, these show a side bracket support 1 according to an embodiment of the present invention. The only difference between Figure 1.1 and Figure 1.2 is the position of the bush: horizontal in Figure 1.1 and vertical in Figure 1.2. Figures 2 also show various views of the side bracket support 1.

The side bracket support 1 comprises a wall plate 10, a screw 20, a pin 30, a bush 40 and a grub screw 50 for locking the bush 40 to the pin 30. Hereinbelow, the various components will be described separately. They will then be described assembled to form the side bracket support 1 and finally some embodiments for using the side bracket support 1 according to the invention will be described.

The wall plate 10 (Figures 4.1 and 4.2) has roughly the form of an elongated rectangle with rounded corners. Preferably, it has a double symmetry with respect to a longitudinal axis Y-Y and with respect to a transverse axis X-X. The wall plate 10 has one side face 11 which, during use, is directed towards the wall W and an opposite side face 12 directed towards the upright V of the furniture unit. In one embodiment, the wall plate 10 has a length of about 40 mm, a width of about 12 mm and a thickness of about 3 mm. Depending on the intended use, the wall plate 10 may have different dimensions.

Preferably, the wall plate 19 has an elongated longitudinal slot 13 which extends in the direction of the longitudinal axis Y-Y. The longitudinal slot 13 may have a length of about 15 mm with an interaxial distance of about 10 mm. Preferably, the longitudinal slot 13 has a flared form which opens out within the side face 11 of the plate 10 which is directed towards the wall W. The longitudinal slot 13 provides the vertical adjustment, as will be explained below.

Preferably, the wall plate 10 comprises one or two transverse slots 14 with their axis parallel to the transverse axis X-X. Each transverse slot 14 is situated close to the short sides of the plate 10 and extends substantially over the entire useful length. Preferably, each transverse slot 14 has a length of about 8 mm with an interaxial distance of about 4 mm. Preferably, the transverse slots 14 have a flared form which opens out within the side face 12 of the plate 10 which is directed towards the upright V. The transverse slots 14 provide the horizontal adjustment, as will be explained below.

With reference to Figures 3.1 and 3.2, the screw 20 of the side bracket support 1 according to the present invention will now be described. The screw 20 has a flat head 21 and a threaded shank 22. The head 21 has an oval shape substantially complementing that of the longitudinal slot 13, but with a smaller length. In this way, as will be explained below, the head 21 may be displaced longitudinally with respect to the wall plate 10, assuming a top end-of-travel position, a bottom end-of-travel position and intermediate positions. In the event of a flared longitudinal slot 13, the head 21 of the screw 20 is flared in a substantially complementary manner so as to produce a wedge-like effect. The shank 22 projects perpendicularly from the head 21. In embodiments, it has an M4 or M5 thread.

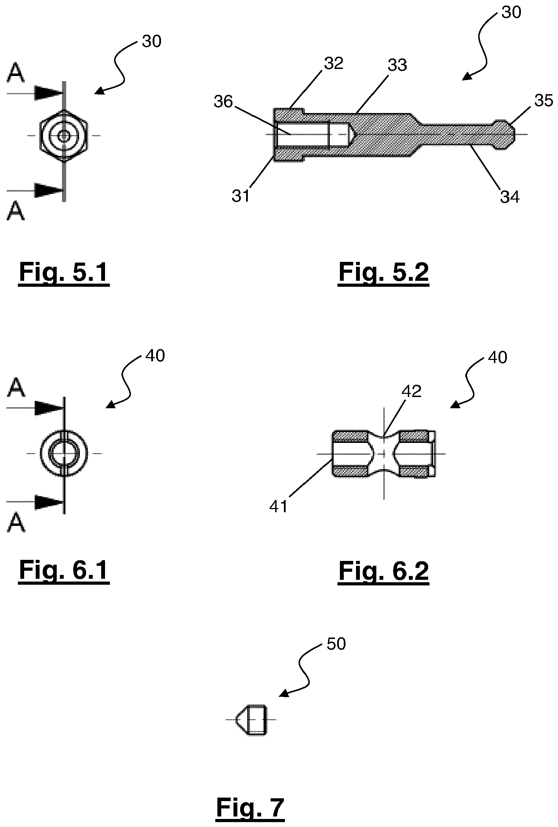

With reference to Figures 5.1 and 5.2, the pin 30 of the side bracket support 1 according to the present invention will now be described. The pin 30 is an elongated cylindrical member with a cross-section which changes from the base 31 to the free front end 35. More precisely, preferably, the base 31 has a hexagonal cross-section 32, the central part 33 has a circular cross-section with a first diameter and the end part 34 has a circular cross-section with a second diameter smaller than the first diameter. Preferably, the end part 34 terminates with an enlarged head 35. As will be explained below, the narrowed part 34 provides the third adjustment, namely the depthwise adjustment. According to embodiments, the pin 30 has a diameter of about 7 mm and an overall length of about 35 mm. According to the present invention, the pin 30 comprises an axial hole 36 open towards the base 31. The axial hole 36 has a female thread which complements the male thread on the shank 22 of the screw 20. The pin 30 may be screwed onto the screw 20 so as to lock the pin 30 with respect to the wall plate 10 arranged between them.

With reference to Figures 6.1 and 6.2, the bush 40 of the side bracket support 1 according to the present invention will now be described. The bush 40 is in the form of a cylindrical body with a circular cross-section having a longitudinal through-hole 41 and a transverse through-hole 42. The transverse through-hole 42 is configured to allow the passage through it of the narrowed part 34 of the pin 30 and, where present, of the enlarged head 35 of the pin. Preferably, the longitudinal hole 41 has a thread, for example M5 thread. Preferably, at least one end of the bush 40 has an annular knurling 43 (Figures 2.1 and 2.5) and an incision 44 for rotating and suitably directing the bush (for example using a flat-blade screwdriver) once it has been inserted inside a hole of the upright.

With reference to Figure 7, the grub screw 50 of the side bracket support 1 according to the present invention will now be described.

The grub screw 50 has a male thread which complements the female thread in the longitudinal hole 41 of the bush 40. Preferably, the grub screw 50 has a hexagonal socket or incision of the known type for screwing or unscrewing the grub screw 50 relative to the bush 40.

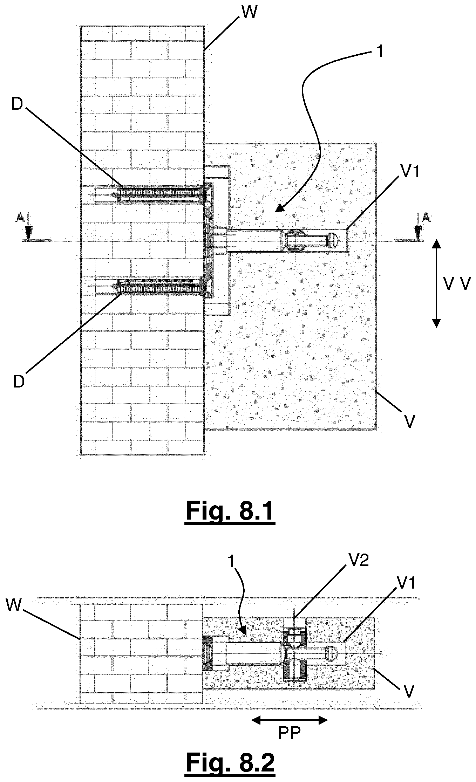

With reference again to Figures 1.1 and 1.2, as will be clear from the above description of the single components, the screw 20 is mounted with respect to the plate 10 by inserting (from behind) the head 21 of the screw 20 inside the longitudinal slot 13. In this way, the shank 22 of the screw 20 projects from the side face 12 of the plate directed towards the upright V. The pin 30 is screwed together with the screw 20, also with the aid of the hexagonal section 32 at the base of the pin 30, which may be engaged with an ordinary hex spanner. In the various Figures 1 and 2, the pin 30 is in a substantially central longitudinal position but, as mentioned above, it may be fixed in a position higher or lower than the central position. The vertical adjustment is illustrated graphically by means of a double-headed arrow VV in Figures 8-11.

Preferably, the grub screw 50 is pre-screwed before engagement between the pin 30 and the bush 40.

Figures 1.1 and 1.2 show the bush 40 mounted on the pin 30, but it is clear that, during use, the bush 40 must be inserted inside a hole V2 in the upright before the pin 30 is inserted inside a hole V1 with its axis transverse to that of the bush.

The bush 40 may be arranged with respect to the pin 30 so that it has a horizontal axis (Figure 1.1) or vertical axis (Figure 1.2) depending on the intended use of the side bracket support 1.

Figures 8-11 show, in cross-sectional views, working configurations of the side bracket support 1 according to the present invention.

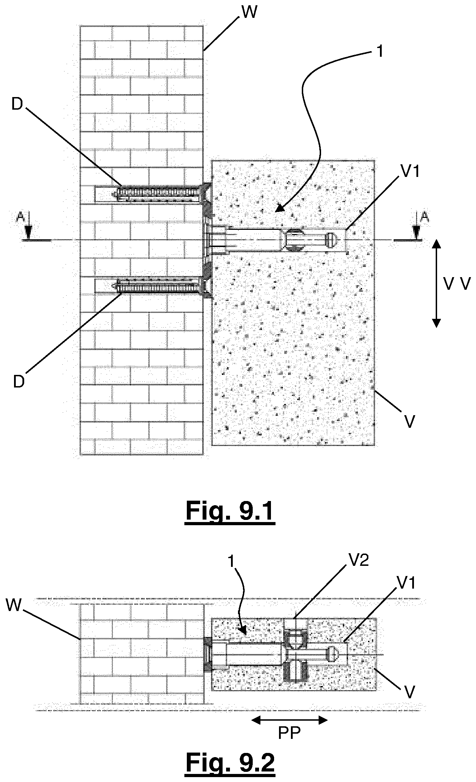

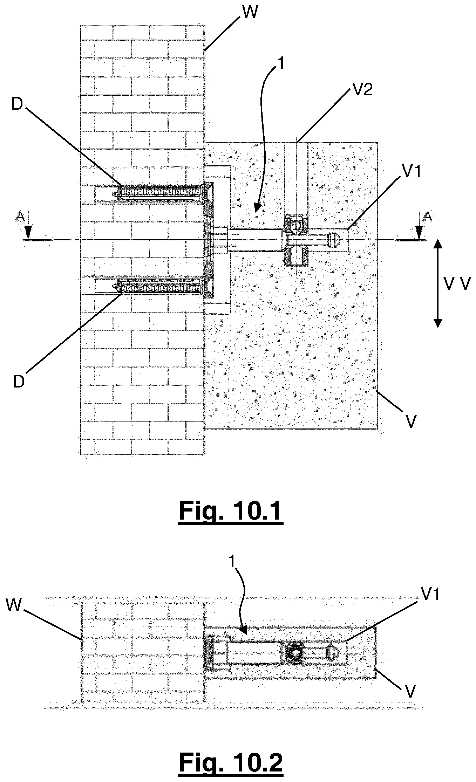

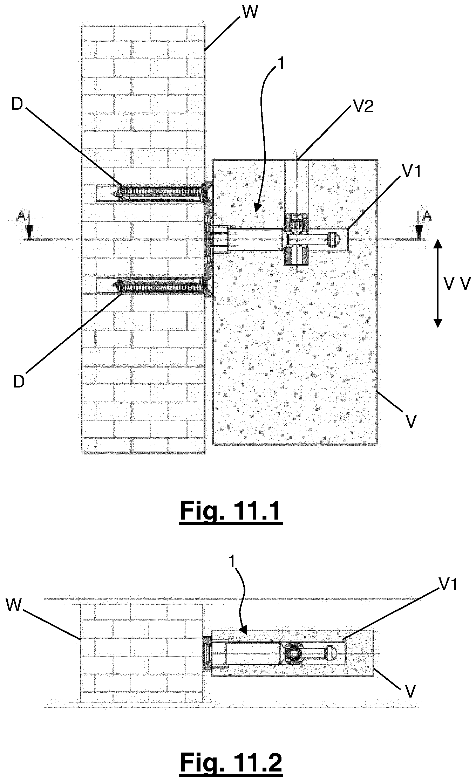

In particular, in Figures 8 and 10 the wall plate 10 of the side bracket support 1 is recess-mounted inside the upright V of the furniture unit to be supported, while in Figures 9 and 11, the plate 10 of the side support bracket 1 is situated on the outside and not recess-mounted. The first solution is advantageous from an aesthetic point of view, while the second solution (not recess-mounted) allows the bottom of the furniture unit to be kept detached from the wall W by a few millimetres. This may be advantageous for preventing direct contact between the upright V of the furniture unit and the wall W.

Advantageously, the wall plate 10 may be fixed to the wall W by means of screws and rawl plugs D. The transverse slots 14 allows correction of any small assembly imprecision (horizontal adjustment). The fitter may slacken the screws and horizontally displace the wall plate 10 to the right or to the left depending on the needs.

Advantageously, the upright V of the furniture unit to be fixed to the wall comprises a first hole V1 for the pin and a second hole V2 for the bush 40. The axis of the second hole V2 is perpendicular to the axis of the first hole V1. The second hole V2 is preferably formed in a position such that the bush 40 is situated in an intermediate position on the narrowed part 34 of the pin 30. In this way, the fitter may adjust the depthwise distance of the furniture unit from the wall W.

The depthwise adjustment is illustrated graphically by means of a double-headed arrow PP in Figures 8-11.

The axis of the second hole V2 may be perpendicular to the plane of the upright V, as shown in Figures 8 and 9. In this case the fitter locks the grub screw 50 using a tool (for example an Allen key), operating via the outer side or inner side of the upright V.

However, alternatively, the axis of the second hole V2 may be parallel to the plane of the upright V, as shown in Figures 10 and 11. In this case, the fitter locks the grub screw 50 using a tool (for example an Allen key), operating from the top of the upright V. Obviously this type of use is not always possible because the space between the ceiling and the hanging unit is very small and does not allow the insertion of any tools.

The side bracket support 1 according to the present invention is a light and compact device formed by a small number of components. At the same time, it is strong, practical, functional and versatile. The same side bracket support may be used with locking of the grub screw on the side or at the top (from above). This is a particularly advantageous aspect not only for the manufacturer of the side bracket support, but also for the fitters.

Another particularly advantageous aspect is that only circular holes (V1 and V2) are formed in the upright, i.e. one for the pin 30 and one for the bush 40. Preferably, the hole V1 for the bush, along a first section thereof, has a larger diameter for the hexagonal part of the pin 30.

Unless the wall plate is to be recess-mounted, no milling operation is required. Therefore the manufacturer of the furniture unit need only have a tool (for example a drill) for making holes, but not a milling machine which is much more costly. In the known device it was required to perform a milling cut and drill three further holes.

In order to drill the holes for the rawl plugs in the correct relative position special templates may be used.

## Claims

1. A side bracket support (1) for fastening a furniture unit to a wall (W), the furniture unit comprising an upright (V), the side bracket support (1) comprising:
a wall plate (10) configured to be fixed to a wall (W), said plate (10) comprising a transverse slot (14) for a wall attachment member (D), the transverse slot (14) allowing variation of the relative position of said attachment member (D) and said wall plate (10) so as to provide a horizontal adjustment,
a pin (30) projecting from said plate (10), the pin being configured in such a way that the relative position of said pin (30) and said wall plate (10) can be varied so as to provide a vertical adjustment (VV), and
a bush (40), configured to engage with said pin (30) along a narrowed part (34) thereof with a smaller cross-section so as to provide a depthwise adjustment (PP).

2. The side bracket support (1) of claim 1, wherein the wall plate (10) comprises two transverse slots (14) for two respective wall attachment members (D).

3. The side bracket support (1) of claim 1 or 2, further comprising a longitudinal slot (13) and a screw (20) having a head (21) and a shank (22), the head (21) of the screw being configured to engage inside the longitudinal slot (13) and the shank (22) of the screw being configured to engage inside a longitudinal hole (36) of the pin (30).

4. The side bracket support (1) of claim 1, 2 or 3, wherein said longitudinal slot (13) is flared and the head (21) of the screw is shaped in a substantially complementary manner with respect to the flared form of the longitudinal slot (13).

5. The side bracket support (1) of any of claims 2-4, wherein each of said transverse slots (14) is flared.

6. The side bracket support (1) of any one of the preceding claims, wherein said pin (30) comprises a base (31) having a polygonal cross-section (32) for screwing or unscrewing the pin (30) with respect to the screw (20) and, consequently, with respect to the plate (10).

7. The side bracket support (1) of any one of the preceding claims, wherein said pin (30) comprises an enlarged anti-disengagement end (35).

8. A furniture unit comprising a vertical panel (V) and a horizontal panel and a side bracket support (1) according to any one of the preceding claims, wherein the vertical panel (V) comprises a first hole (V1) for the pin (30) and a second hole (V2) for the bush (40), the second hole (V2) being substantially perpendicular to the first hole (V1) and wherein
the axis of said second hole (V2) is substantially perpendicular to the plane of said vertical panel (V) in such a way that locking of said bush (40) with respect to the pin (30) is carried out on one side of said vertical panel (V) or
the axis of said second hole (V2) is substantially parallel to the plane of said vertical panel (V) in such a way that locking of said bush (40) with respect to the pin (30) is carried out at the top end of said vertical panel (V).
